# EUROPÄISCHE PATENTSCHRIFT

(11) **EP 4 166 482 B1**
(45) Veröffentlichungstag und Bekanntmachung des Hinweises auf die Patenterteilung: **22.05.2024**
(21) Anmeldenummer: 22190094.7
(22) Anmeldetag: 12.08.2022
(51) Int. Cl.: B65G 19/02, B65G 47/61

(54) **HÄNGEFÖRDERTECHNIK UND VERFAHREN ZUM FÖRDERN VON HÄNGEADAPTERN SOWIE HÄNGEFÖRDERANLAGE MIT EINER DERARTIGEN HÄNGEFÖRDERTECHNIK**
OVERHEAD CONVEYOR TECHNOLOGY AND METHOD FOR CONVEYING HANGERS AS WELL AS OVERHEAD CONVEYOR WITH SUCH OVERHEAD CONVEYOR TECHNOLOGY
TECHNIQUE DE TRANSPORT SUSPENDU ET PROCÉDÉ DE TRANSPORT DES ADAPTATEURS DE SUSPENSION, AINSI QU'INSTALLATION DE TRANSPORT SUSPENDU DOTÉE D'UNE TELLE TECHNIQUE DE TRANSPORT SUSPENDU

(30) Priorität: 13.10.2021 DE 102021211571
(43) Veröffentlichungstag der Anmeldung: 19.04.2023
(73) Patentinhaber: Dürkopp Fördertechnik GmbH, 33719 Bielefeld (DE)
(72) Erfinder: Sieksmeier, Dirk, 32139 Spenge (DE)
(74) Vertreter: Rau, Schneck & Hübner Patentanwälte Rechtsanwälte PartGmbB

(56) Entgegenhaltungen:
- EP-A1- 1 293 455
- EP-A1- 2 910 499
- WO-A1-2021/127715
- DE-C1- 10 039 394

## Beschreibung

Die Erfindung betrifft eine Hängefördertechnik und ein Verfahren zum Fördern von Hängeadaptern sowie eine Hängeförderanlage mit einer derartigen Hängefördertechnik.

EP 1 293 455 A1 offenbart eine Hängefördertechnik gemäß dem Oberbegriff des Anspruchs 1 und ein Verfahren zum Einlagern von Fördergut-Teilen in einen Speicher und zur Ausgabe von ausgewählten Fördergut-Teilen.

Es ist bekannt, Einzelwaren mittels Hängeadaptern in einer Hängeförderanlage hängend zu fördern und zu kommissionieren. Im Rahmen der Kommissionierung werden die Einzelwaren nach Aufträgen sortiert, gegebenenfalls zwischengespeichert und zu Packplätzen zum Verpacken der Einzelwaren für den Versand gefördert. Das Sortieren und/oder Zwischenspeichern der Einzelwaren erfolgt in mindestens einem Zwischenspeicher, aus dem die einem Auftrag zugehörigen Einzelwaren gezielt ausgeschleust und zu den Packplätzen gefördert werden. Dieser Vorgang wird auch als Pickprozess beschrieben. Um die auszuschleusenden Einzelwaren in dem Zwischenspeicher zuverlässig zu identifizieren, ist es erforderlich, die Hängeadapter entlang der Förderrichtung mit einem erforderlichen Mindestabstand zu fördern. Dadurch ist die Förderrate, also die Anzahl der pro Zeiteinheit geförderten Hängeadapter, reduziert. Insbesondere bei einer geringen Ausschleusequote ist der Warenfluss in der Hängeförderanlage unnötig reduziert.

Es ist die Aufgabe der vorliegenden Erfindung, das Kommissionieren von hängend geförderten Einzelwaren zu verbessern, insbesondere den Warendurchsatz zu erhöhen, insbesondere auch bei geringen Ausschleusequoten, und insbesondere einen zuverlässigen Ausschleusevorgang zu garantieren.

Diese Aufgabe ist erfindungsgemäß gelöst durch eine Hängefördertechnik mit den im Anspruch 1 angegebenen Merkmalen, durch eine Hängeförderanlage mit den im Anspruch 6 angegebenen Merkmalen und durch ein Verfahren mit den im Anspruch 7 angegebenen Merkmalen.

Erfindungsgemäß wurde erkannt, dass aus einem Strom von Einzelwaren, die jeweils mittels eines Hängeadapters hängend gefördert werden, lediglich ein Anteil aus einer Hängefördertechnik ausgeschleust und beispielsweise zu einem Packplatz gefördert wird. Um diesen Anteil der Einzelwaren zuverlässig ausschleusen zu können, ist es erforderlich, einen Mindest-Förderabstand entlang der Förderrichtung der Hängeadapter sicherzustellen, um ein zuverlässiges Identifizieren und anschließendes Ausschleusen der betreffenden Hängeadapter zu gewährleisten. Der Mindest-Förderabstand ergibt sich insbesondere aus dem Ausschleusevorgang der Hängeadapter und insbesondere durch ein Ausschleuseelement, das für den Ausschleusevorgang genutzt wird. Insbesondere wird das Ausschleuseelement zwischen einer Ausschleusestellung und einer Förderstellung geschaltet. Je schneller der Schaltvorgang erfolgt, desto kleiner kann der Mindest-Förderabstand festgelegt werden. Je kleiner der Mindest-Förderabstand ist, desto höher ist die Förderrate mit der Hängeförderanlage. Es wurde aber auch erkannt, dass für die nicht-auszuschleusenden Hängeadapter dieser Mindest-Förderabstand nicht erforderlich ist. Nicht-auszuschleusende Hängeadapter können also mit einem geringeren Förderabstand gefördert und an dem Ausschleuseelement vorbeigeführt werden. Dadurch kann die Förderrate immer dann, wenn kein Ausschleusevorgang stattfindet, erhöht werden. Insbesondere bei geringen Ausschleusequoten, von beispielsweise weniger als 50 %, insbesondere von weniger als 40 %, insbesondere von weniger als 30 %, insbesondere von weniger als 20 %, insbesondere von weniger als 15 % und insbesondere von höchstens 10 %, ist die Gesamtförderquote dadurch erhöht. Als Ausschleusequote wird die Anzahl der auszuschleusenden Hängeadapter bezogen auf die Gesamtanzahl der betrachteten und/oder identifizierten Hängeadapter in der Hängefördertechnik verstanden.

Erfindungsgemäß wurde also erkannt, dass die Förderdichte der Hängeadapter entlang der Förderrichtung veränderlich eingestellt werden kann, insbesondere in Abhängigkeit eines bevorstehenden Ausschleusevorgangs und insbesondere in Abhängigkeit davon, ob der nächste Hängeadapter auszuschleusen ist oder nicht.

Diese Erkennung erfolgt erfindungsgemäß zweistufig mittels einer ersten und einer zweiten Identifikationseinheit. Die erste Identifikationseinheit identifiziert in einer ersten Stufe, ob in einer Menge von Hängeadaptern mindestens ein Hängeadapter vorhanden ist, der nachfolgend ausgeschleust werden soll. Die erste Identifikationseinheit ermöglicht also eine Vor-Erkennung. Die Vor-Erkennung erfolgt insbesondere, bevor der Förderabstand zwischen zwei benachbarten Hängeadaptern veränderlich festgelegt wird.

Stromabwärts der ersten Identifikationseinheit ist eine Vereinzelungseinheit angeordnet, wobei die Vereinzelungseinheit ein vereinzeltes Fördern der Hängeadapter mit unterschiedlichen Förderabständen ermöglicht. Für den Fall, dass von der ersten Identifikationseinheit keine auszuschleusenden Hängeadapter identifiziert worden sind, erfolgt die Vereinzelung mit einem Förderabstand, der kleiner ist als der Mindest-Förderabstand. Dadurch ist die Förderquote, also die Förderrate, erhöht. Für den Fall, dass mittels der ersten Identifikationseinheit mindestens ein auszuschleusender Hängeadapter identifiziert worden ist, werden die Hängeadapter nachfolgend mit dem erforderlichen Mindest-Förderabstand mittels der Vereinzelungseinheit vereinzelt und in der Funktions-Hängeförderstrecke gefördert. Dadurch ist ein zuverlässiges Ausschleusen der Hängeadapter mittels des Ausschleuseelements sichergestellt. Der Mindest-Förderabstand ergibt sich insbesondere aus der Fördergeschwindigkeit entlang der Funktions-Hängeförderstrecke und/oder dem Ausschleuseelement. Von der Steuerungseinheit wird ein entsprechendes Stellsignal erzeugt und an die Vereinzelungseinheit übermittelt.

Mittels einer zweiten Identifikationseinheit werden in einer zweiten Stufe die Hängeadapter einzeln identifiziert. Wenn der identifizierte Hängeadapter zum Ausschleusen vorgesehen ist, weil er einem zu kommissionierenden Auftrag angehört, wird ein Ausschleusesignal erzeugt und an das Ausschleuseelement zum Ausschleusen der Hängeadapter übermittelt.

Die Identifikationseinheiten sind derart ausgeführt, dass sie Daten aus dem Hängeadapter auslesen und in Kommunikation mit einer Steuerungseinheit identifizieren, ob der jeweilige Hängeadapter Einzelwaren fördert, die zur Ausschleusung anstehen. Insbesondere sind mittels des Identifikationsmittels Hängeadapterdaten gespeichert, die durch die Identifikationseinheiten, insbesondere kontaktlos, ausgelesen werden können, insbesondere im Vorbeifahren der Hängeadapter. Die Hängeadapterdaten enthalten insbesondere Informationen zu der geförderten Einzelware und insbesondere zu der Auftragszugehörigkeit. Wenn die an dem Hängeadapter geförderte Einzelware einem zu kommissionierenden Auftrag zugehörig ist, ist die Einzelware, also der Hängeadapter, aus der Hängefördertechnik auszuschleusen.

Wesentlich ist, dass die Steuerungseinheit ein automatisiertes Fördern der Hängeadapter in der Hängefördertechnik und ein automatisiertes Ausschleusen von Hängeadaptern aus der Hängefördertechnik ermöglicht. Dazu ist die Steuerungseinheit mit dem Ausschleuseelement, den Identifikationseinheiten und der Vereinzelungseinheit in Signalverbindung, insbesondere in bidirektionaler Signalverbindung.

Dadurch, dass in Abhängigkeit der im Bereich des Ausschleuseelements geförderten Hängeadapter der Förderabstand veränderlich festlegbar ist, kann sowohl der erforderliche Mindest-Förderabstand für das zuverlässige Ausschleusen von Hängeadaptern als auch ein reduzierter Förderabstand für nicht-auszuschleusende Hängeadapter und damit eine erhöhte Förderrate garantiert werden. Das Fördern und Kommissionieren von Einzelwaren ist zuverlässig und mit einer insgesamt erhöhten Förderrate möglich.

Erfindungsgemäß ist eine adaptive Anpassung des Förderabstands in Abhängigkeit des jeweils identifizierten Hängeadapters möglich, wobei diese Anpassung aufgrund der Vor-Erkennung mittels der ersten Identifikationseinheit, die der Vereinzelungseinheit vorgeschaltet ist, besonders effizient erfolgt.

Eine Hängefördertechnik, bei der die Vereinzelungseinheit mittels der Steuereinheit derart steuerbar, dass ein entlang der Förderrichtung orientierter Förderabstand zwischen zwei benachbarten Hängeadaptern veränderlich festlegbar ist, vereinfacht die veränderliche Festlegung des Förderabstands.

Eine Hängefördertechnik gemäß Anspruch 2 ist besonders effizient. Ein Umlaufspeicher ermöglicht ein endlos umlaufendes Zwischenspeichern von Hängeadaptern. Derartige Umlaufspeicher werden auch als rotierende Speichersysteme bezeichnet.

Eine Hängefördertechnik gemäß Anspruch 3 ermöglicht eine unkomplizierte konstruktive Ausgestaltung.

Eine Hängefördertechnik gemäß Anspruch 4 ermöglicht das flexible Einschleusen von Hängeadaptern in die Hängefördertechnik.

Eine Hängefördertechnik gemäß Anspruch 5 vereinfacht das Erkennen auszuschleusender Einzelwaren. In einem Vorlaufbereich wird eine Gruppe von Hängeadaptern angeordnet und die Hängeadapter insbesondere beim Einfahren in den Vorlaufbereich von der ersten Identifikationseinheit identifiziert. Durch die Festlegung der Länge des Vorlaufbereichs wird die Anzahl der Hängeadapter, die innerhalb des Vorlaufbereichs gleichzeitig anordenbar sind, festgelegt. Dabei ist es vorteilhaft, wenn die Anzahl der Hängeadapter, also die Länge des Vorlaufbereichs insbesondere so ausgeführt ist, dass erwartungsgemäß im Vorlaufbereich maximal ein auszuschleusender Hängeadapter angeordnet sein wird. Die Länge des Vorlaufbereichs kann also insbesondere in Abhängigkeit der Ausschleusequote festgelegt werden. Wenn die Ausschleusequote beispielsweise 10 % beträgt, bedeutet dies, dass durchschnittlich einer von zehn Hängeadaptern ausgeschleust wird. In diesem Fall hat der Vorlaufbereich eine Länge in Förderrichtung derart, dass zehn Hängeadapter gleichzeitig im Vorlaufbereich angeordnet sein können. Wenn der Vorlaufbereich zu klein gewählt wird, besteht ein Risiko, dass das Umschalten auf den Mindest-Förderabstand zu spät erfolgt und deshalb ein auszuschleusender Hängeadapter nicht zuverlässig ausgeschleust wird. Wenn der Vorlaufbereich zu groß gewählt wird, ist das Risiko groß, dass mehrere auszuschleusende Hängeadapter in dem Vorlaufbereich angeordnet sind. Das bedeutet, dass zu häufig der Mindest-Förderabstand angewendet wird, obwohl beispielsweise zwischen zwei auszuschleusenden Hängeadaptern eine Reihe von nicht auszuschleusenden Hängeadaptern gefördert werden. Wenn der Vorlaufbereich zu groß gewählt wird, verpufft der erfindungsgemäße Effekt der vorübergehenden Steigerung der Förderrate.

Insbesondere entspricht die Länge des Vorlaufbereichs dem Abstand entlang der Förderrichtung zwischen der ersten Identifikationseinheit und der Vereinzelungseinheit.

Es ist insbesondere vorteilhaft, die erste Identifikationseinheit entlang der Förderrichtung veränderlich festlegbar an der Hängefördertechnik anzuordnen. Dadurch ist es insbesondere möglich, die Länge des Vorlaufbereichs, insbesondere in Abhängigkeit der zu erwartenden Ausschleusequote, veränderlich anzupassen. Die Ausschleusequote kann sich insbesondere mit dem Artikelbestand und/oder mit der Anzahl der Hängefördertechniken in einer Hängeförderanlage verändern. Durch die veränderliche Festlegung des Vorlaufbereichs kann dessen Größe an die aktuelle Ausschleusequote angepasst werden und damit eine besonders hohe Effizienz, also eine besonders hohe effiziente Förderrate, sichergestellt werden. Dies kann beispielsweise manuell erfolgen. Beispielsweise können Befestigungsvorrichtungen für die erste Identifikationseinheit in einem vordefinierten Raster vorgesehen sein. Zusätzlich oder alternativ kann die veränderliche Befestigung der ersten Identifikationseinheit auch stufenlos und/oder automatisiert, beispielsweise mittels eines Verlagerungsantriebs erfolgen.

Eine Hängeförderanlage gemäß Anspruch 6 weist im Wesentlichen die Vorteile der Hängefördertechnik auf, worauf hiermit verwiesen wird.

Das Verfahren gemäß Anspruch 7 weist die Vorteile der Hängefördertechnik auf, worauf hiermit verwiesen wird. Wesentlich ist, dass insbesondere in Abhängigkeit des ersten Identifikationssignals von der Steuerungseinheit ein erstes oder zweites Stellsignal erzeugt wird in Abhängigkeit davon, ob ein auszuschleusender Hängeadapter identifiziert worden ist. Wenn dies der Fall ist, wird der Förderabstand zwischen den Hängeadaptern mittels der Vereinzelungseinheit auf den erforderlichen Mindest-Förderabstand erweitert, um das zuverlässige Ausschleusen des entsprechenden Hängeadapters zu gewährleisten.

Ein Verfahren gemäß Anspruch 8 vereinfacht das Identifizieren auszuschleusender Hängeadapter. Dazu sind an den Hängeadaptern insbesondere Identifikationsmittel vorgesehen, insbesondere ein RFID-Chip oder ein grafischer Code wie beispielsweise ein Strichcode oder ein QR-Code.

Entsprechend sind die Identifikationseinheiten als Transponderleser zum Kommunizieren mit dem RFID-Chip oder als Code-Leser zum Erfassen des Strichcodes oder des QR-Codes ausgeführt.

Insbesondere weist ein RFID-Chip entlang der Förderrichtung der Hängeförderanlage eine Breite, insbesondere einen Durchmesser, auf, der kleiner ist als eine ebenfalls entlang der Förderrichtung orientierte Breite des Hängeadapters. Daraus ergibt sich ein Mindestabstand zwei benachbarter RFID-Chips, die insbesondere jeweils in dem Hängeadapter integriert angeordnet sind, entlang der Förderrichtung. Vorteilhaft ist es, wenn die erste Identifikationseinheit, die stromaufwärts der Vereinzelungseinheit angeordnet ist, eine höhere Leserate aufweist, als die zweite Identifikationseinheit. Insbesondere ist die erste Identifikationseinheit geeignet, mehr Lesevorgänge pro Zeiteinheit durchzuführen als die zweite Identifikationseinheit. Dies ist insbesondere möglich durch eine gezielte Anpassung der magnetischen Feldverteilung für die erste Identifikationseinheit.

Ein Verfahren gemäß Anspruch 9 ermöglicht ein vorteilhaftes und platzsparendes Zwischenspeichern der Hängeadapter.

Ein Verfahren gemäß Anspruch 10 vermeidet ein unbeabsichtigtes Ausschleusen eines Hängeadapters. Insbesondere ist sichergestellt, dass das Ausschleuseelement nicht unbeabsichtigterweise ein Ausschleusesignal erhält. Insbesondere ist dadurch eine Kollision ausgeschlossen, weil beispielsweise ein Ausschleusevorgang eingeleitet wird, obwohl die Hängeadapter mit zu geringem Förderabstand gefördert werden.

Ein Verfahren gemäß Anspruch 11 vereinfacht das, insbesondere automatisierte, Überwachen der auszuschleusenden Hängeadapter. Eine Liste, in die Hängeadapter eingetragen und aus der die Hängeadapter wieder ausgetragen werden, ist insbesondere eine elektronische Liste, die insbesondere automatisiert geführt wird, insbesondere in einer zentralen Steuerungseinheit. Dadurch kann unmittelbar abgeleitet werden, ob und wenn ja, wie viele, Hängeadapter zum Ausschleusen vorgesehen sind. Die Anpassung des Förderabstands, insbesondere automatisiert, ist dadurch vereinfacht. Das Verfahren ist zuverlässig und fehlersicher durchführbar.

Ein Verfahren gemäß Anspruch 12 vereinfacht ein automatisiertes Umschalten in den Betriebsmodus mit erhöhter Förderrate. Insbesondere wird das zweite Stellsignal immer dann erzeugt, wenn die Liste mit auszuschleusenden Hängeadaptern geleert worden ist. Dies ist insbesondere dann der Fall, wenn sämtliche auszuschleusenden Hängeadapter zunächst von der ersten Identifikationseinheit erfasst und in die Liste eingetragen worden sind und anschließend von der zweiten Identifikationseinheit erfasst und ein entsprechendes Ausschleusesignal an die Ausschleuseeinheit übertragen worden sind. Die von der zweiten Identifikationseinheit erfassten Hängeadapter werden aus der Liste gelöscht. Wenn der letzte Hängeadapter aus der Liste gelöscht, also ausgetragen worden ist, ist die Liste leer. Insbesondere ist das dadurch sichergestellt, dass das zweite Stellsignal nur dann erzeugt wird, wenn sämtliche auszuschleusende Hängeadapter von der zweiten Identifikationseinheit bereits erfasst worden sind. Eine Fehlfunktion der Hängefördertechnik ist dadurch ausgeschlossen. Insbesondere ermöglicht dieses Verfahren eine erhöhte Förderrate, da das Umschalten in ein Fördern mit dem zweiten Förderabstand automatisiert erfolgt.

Weitere Merkmale, Vorteile und Einzelheiten der Erfindung ergeben sich aus der nachfolgenden Beschreibung eines Ausführungsbeispiels anhand der Zeichnung. Es zeigen:
- Fig. 1: eine schematische Darstellung einer erfindungsgemäßen Hängefördertechnik einer Hängeförderanlage,
- Fig. 2: eine Fig. 1 entsprechende Darstellung der Hängefördertechnik, bei der die Hängeadapter mit einem Mindest-Förderabstand im Bereich einer Vereinzelungseinheit gefördert werden.

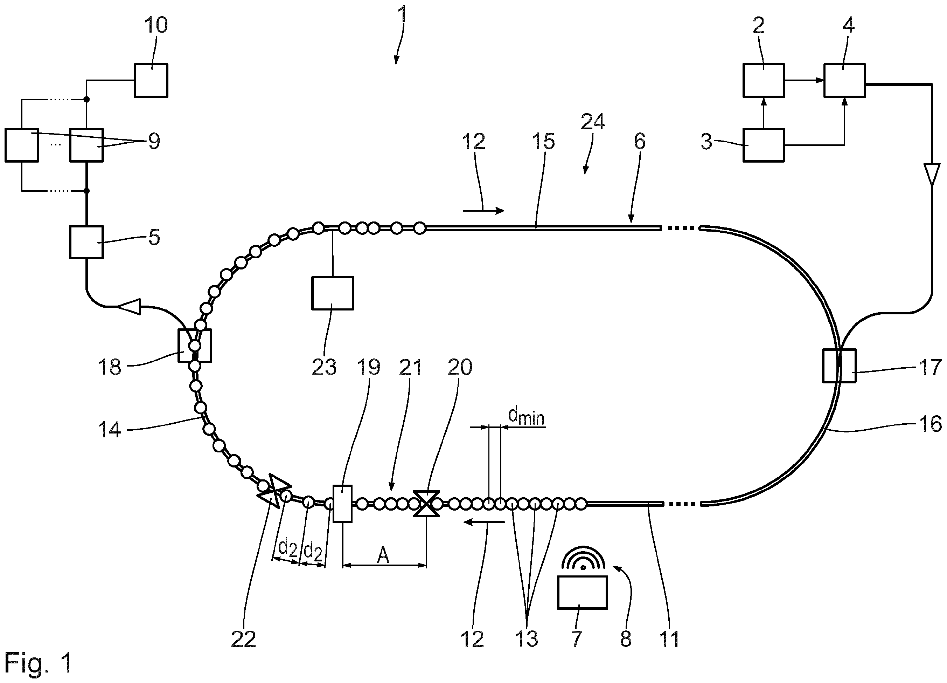

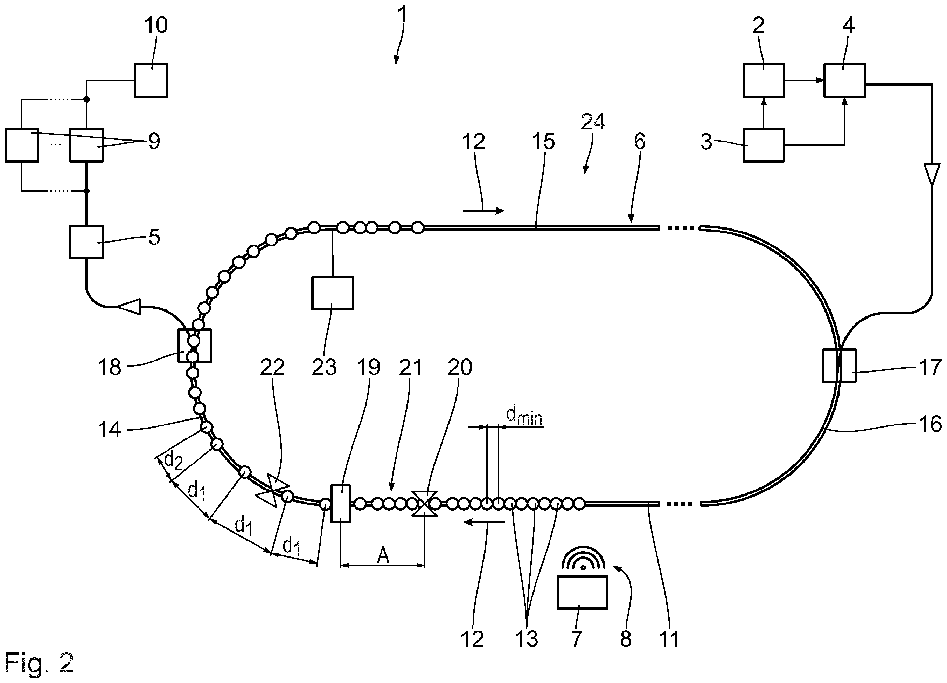

Eine in Fig. 1 und 2 rein schematisch dargestellte Hängeförderanlage dient zum Fördern und Kommissionieren von Einzelwaren zu Aufträgen. Die Einzelwaren werden auch als Artikel bezeichnet. Die Hängeförderanlage 1 umfasst ein Warenlager 2, in dem die Einzelwaren eingelagert sind. Das Warenlager 2 kann als manuelles Lager oder als automatisches Lager ausgeführt sein. Die Hängeförderanlage 1 weist ferner einen Wareneingang 3 auf, über den die Einzelwaren der Hängeförderanlage 1, insbesondere von extern, zugeführt werden. Dem Wareneingang 3 können auch Retourenwaren zugeführt werden.

Der Wareneingang 3 ist fördertechnisch mit dem Warenlager 2 verbunden. Die fördertechnische Verbindung ist beispielsweise durch ein Förderband oder eine manuelle Zubringung der Einzelwaren, die insbesondere auch in Gebinden im Wareneingang 3 vorliegen können, ausgeführt.

Die Hängeförderanlage 1 umfasst ferner eine Aufgabestation 4, an der die Einzelwaren beispielsweise in eine Fördertasche aufgegeben werden. Es wird insbesondere genau eine Einzelware in eine Fördertasche aufgegeben. Die Fördertaschen werden jeweils mit einer Einzelware beladen. Die Aufgabestation wird auch als Beladestation bezeichnet. Die Einzelwaren, die in die Fördertaschen beladen werden, werden auch als Liegeware bezeichnet. Die Liegeware wird mittels der Fördertaschen in der Hängeförderanlage 1 hängend gefördert. Zusätzlich oder alternativ kann an der Aufgabestation 4 auch sogenannte Hängeware aufgegeben werden. Hängeware ist Einzelware, die insbesondere an einem Kleiderbügel hängend, insbesondere Bekleidung, gefördert wird.

Die Beladestation 4 ist zusätzlich direkt mit dem Wareneingang 3 fördertechnisch verbunden. Es ist deshalb möglich, Einzelwaren aus dem Wareneingang 3 direkt zur Aufgabestation 4 zu fördern oder in dem Warenlager 2 einzulagern und anschließend an die Aufgabestation 4 zu fördern.

Es ist möglich, die Hängeförderanlage auch so auszuführen, dass zwischen der Aufgabestation 4 und dem Wareneingang 3 bzw. zwischen der Aufgabestation 4 und dem Warenlager 2 keine fördertechnische Verbindung besteht. In diesem Fall werden die Einzelwaren von dem Warenlager 2 bzw. dem Wareneingang 3 bzw. dem Warenlager 2 manuell zu der Aufgabestation 4 gefördert, beispielsweise mittels Federbodenwagen oder Palettenhubwagen.

Die Fördertaschen und/oder die Kleiderbügel werden jeweils vereinzelt mittels eines in Fig. 1 nicht näher dargestellten Rolladapters in einem Schienensystem der Hängeförderanlage 1 geführt gefördert. Der Rolladapter wird auch als Hängeadapter 13 bezeichnet. Die Fördertaschen und/oder die Kleiderbügel werden hängend mittels der Hängeadapter 13 gefördert. Die Fördertaschen und/oder die Kleiderbügel weisen jeweils ein Identifikationsmittel auf, das beispielsweise als RFID-Chip oder als IdentifikationsCode, insbesondere als Strichcode oder als QR-Code ausgeführt ist. Insbesondere kann ein RFID-Chip in dem Hängeadapter 13 integriert angeordnet sein. In dem jeweiligen Identifikationsmittel sind eindeutige Identifikationsdaten gespeichert. Die Identifikationsdaten werden auch als Hängeadapterdaten bezeichnet. Mittels der Identifikationsdaten ist der jeweilige Hängeadapter mit der daran hängend geförderten Einzelware eindeutig identifizierbar und insbesondere entlang der Hängeförderanlage 1 steuerbar. Insbesondere ist es möglich, den Förderweg der Einzelwaren entlang der Hängeförderanlage 1 nachzuverfolgen und zu steuern.

Zur hängenden Förderung sind die Fördertaschen und/oder die Kleiderbügel jeweils mit einem der Hängeadapter 13 formschlüssig verbunden. Insbesondere weisen die Fördertaschen und/oder die Kleiderbügel jeweils einen Haken auf, der in eine entsprechende Ausnehmung des Hängeadapters 13 einhängbar ist. Alternativ kann auch der Hängeadapter 13 hakenförmig ausgeführt sein und insbesondere in eine Ausnehmung der Fördertasche und/oder des Kleiderbügels eingehängt werden.

Die Hängeförderanlage 1 umfasst eine Sortiereinheit 5 zum Sortieren der Einzelwaren, also zum Verändern der Reihenfolge der Einzelwaren im Warenstrom.

Stromaufwärts der Sortiereinheit 5 ist eine Puffereinheit 24 angeordnet, die mindestens einen und insbesondere mehrere Umlaufspeicher 6 aufweist, wobei in Fig. 1 aus Darstellungsgründen lediglich ein einziger Umlaufspeicher 6 dargestellt ist. Die Sortiereinheit 5 ist fördertechnisch mit der Puffereinheit 24 und die Puffereinheit 24 fördertechnisch mit der Aufgabestation 4 verbunden.

Wenn die Puffereinheit 24 mehrere Umlaufspeicher 6 aufweist, sind diese insbesondere jeweils unabhängig voneinander mit der Aufgabestation 4 fördertechnisch verbunden. Das bedeutet, dass die Umlaufspeicher 6 insbesondere in Förderrichtung parallel zueinander angeordnet sind. Einzelwaren aus der Aufgabestation 4 können in einen der Umlaufspeicher 6 gefördert werden.

Die Puffereinheit 24 dient zum Zwischenpuffern der Einzelwaren und insbesondere zum Zusammenstellen der Einzelwaren in der Sortiereinrichtung zu logischen Gruppen. Insbesondere werden die Einzelwaren zu Gruppen von Einzelwaren zusammengefasst, die einen Auftrag bilden. In der Sortiereinheit 5 können Gruppen von Einzelwaren gebildet werden, die Teil eines Auftrags sind. Insbesondere werden die Einzelwaren in der Sortiereinheit 5 in eine geforderte Reihenfolge sortiert.

Die Hängeförderanlage 1 umfasst eine zentrale Steuerungseinheit 7, die eine Signalverbindung mit anderen Komponenten der Hängeförderanlage 1 ermöglicht. Die Signalverbindung kann kabelgebunden oder kabellos erfolgen. Eine kabellose, funkgebundene Signalverbindung ist in Fig. 1 mit einem Symbol 8 zur Funkübertragung dargestellt.

Die Sortiereinheit 5 ist fördertechnisch mit mindestens einem und insbesondere mit mehreren Packplätzen 9 verbunden. Von der Sortiereinheit 5 werden die Einzelwaren eines Auftrags zu einem der Packplätze 9 gefördert. An den Packplätzen 9 werden die Einzelwaren entladen, also aus den Fördertaschen entnommen und/oder die Kleiderbügel von den Hängeadaptern 13 abgenommen und, insbesondere manuell, gepackt. Die Einzelwaren werden auftragsrein gepackt und insbesondere auftragsweise an einen Warenausgang 10, der fördertechnisch mit den Packplätzen 9 verbunden ist, gefördert.

Nachfolgend werden Aufbau und Funktion des Umlaufspeichers 6 näher erläutert.

Der Umlaufspeicher 6 bildet eine Hängefördertechnik. Der Umlaufspeicher 6 weist eine erste Hängeförderstrecke 11 auf, die insbesondere bezüglich der Förderrichtung 12 linear, insbesondere gerade, ausgeführt ist. Die erste Hängeförderstrecke 11 ist insbesondere als Förderschiene ausgeführt, in der die Hängeadapter 13 hängend gefördert werden. Ein derartiges Schienensystem und die darin förderbaren Hängeadapter 13 für die Hängeförderanlage 1 sind aus DE 10 2005 006 455 A1 bekannt. Bezüglich der Details der Ausgestaltung der Hängeadapter 13 und ihrer Funktion zur Förderung entlang der Hängeförderanlage 1, insbesondere der Hängefördertechnik, wird hierauf explizit verwiesen.

Die erste Hängeförderstrecke 11 ist insbesondere entlang der Förderrichtung 12 gegenüber der Vertikalen nach unten geneigt angeordnet, so dass die Hängeadapter 13 selbsttätig infolge der Schwerkraft entlang der Förderrichtung 12 an der ersten Hängeförderstrecke 11 gefördert werden. Zusätzlich oder alternativ kann die erste Hängeförderstrecke 11 auch einen nicht näher dargestellten Förderantrieb aufweisen, um die Hängeadapter 13 entlang der Förderrichtung 12 angetrieben zu fördern. Wenn ein Förderantrieb vorgesehen ist, kann die erste Hängeförderstrecke 11 auch horizontal oder bezüglich der Horizontalen ansteigend orientiert sein.

An die erste Hängeförderstrecke 11 schließt sich entlang der Förderrichtung 12 eine Funktions-Hängeförderstrecke 14 an. Die Funktions-Hängeförderstrecke 14 bildet eine Funktionseinheit des Umlaufspeichers 6. Die Funktions-Hängeförderstrecke 14 ist nicht-linear ausgeführt, insbesondere halbkreisförmig oder U-förmig.

An der Funktions-Hängeförderstrecke 14 ist insbesondere ein Förderantrieb 23 angeordnet, um die Hängeadapter 13 entlang der Funktions-Hängeförderstrecke 14 angetrieben zu fördern.

An die Funktions-Hängeförderstrecke 14 schließt sich eine zweite Hängeförderstrecke 15 an, die insbesondere identisch zu der ersten Hängeförderstrecke 11 ausgeführt ist. Insbesondere sind die Hängeförderstrecken 11, 15 parallel zueinander orientiert. Die Förderrichtung 12 ist im Bereich der zweiten Hängeförderstrecke 15 insbesondere antiparallel zu der Förderrichtung 12 im Bereich der ersten Hängeförderstrecke 11 orientiert.

An die zweite Hängeförderstrecke 15 schließt sich eine Verbindungs-Hängeförderstrecke 16 an. Die Verbindungs-Hängeförderstrecke 16 ist insbesondere nicht-linear, insbesondere halbkreisförmig oder U-förmig, ausgeführt. An die Verbindungs-Hängeförderstrecke 16 schließt sich die erste Hängeförderstrecke 11 an. Die Verbindungs-Hängeförderstrecke 16 ermöglicht insbesondere eine Rückführung der Hängeadapter 13 von der zweiten Hängeförderstrecke 15 auf die erste Hängeförderstrecke 11. Die Verbindungs-Hängeförderstrecke 16 ist eine Rückführ-Hängeförderstrecke.

Die Hängeförderstrecken 11, 14, 15, 16 bilden den geschlossenen Umlaufspeicher 6, der eine endlose Förderung der Hängeadapter 13 in dem Umlaufspeicher 6 ermöglicht.

An der Verbindungs-Hängeförderstrecke 16 ist ein Einschleuseelement 17 angeordnet. Das Einschleuseelement 17 ermöglicht das Einschleusen von Hängeadaptern 13, die insbesondere von der Aufgabestation 4 angefördert werden, in den Umlaufspeicher 6.

An der Funktions-Hängeförderstrecke 14 ist ein Ausschleuseelement 18 angeordnet, das das Ausschleusen von Hängeadaptern 13 aus dem Umlaufspeicher 6 ermöglicht, um insbesondere die ausgeschleusten Hängeadapter 13 zu den Packplätzen 9 zu fördern. Das Ausschleuseelement 18 ist insbesondere in Form einer schaltbaren Weiche ausgeführt, die je nach Schaltstellung eine Förderung der Hängeadapter 13 entlang der Funktions-Hängeförderstrecke 14 oder zu den Packplätzen 9 bewirkt.

Stromaufwärts der Funktions-Hängeförderstrecke 14 und insbesondere zwischen der ersten Hängeförderstrecke 11 und der Funktions-Hängeförderstrecke 14, ist eine Vereinzelungseinheit 19 angeordnet. Die Vereinzelungseinheit 19 ist schaltbar ausgeführt und ermöglicht ein vereinzeltes Aufgeben von Hängeadaptern 13 in die Funktions-Hängeförderstrecke 14.

Stromaufwärts der Vereinzelungseinheit 19 ist eine erste Identifikationseinheit 20 angeordnet. Die erste Identifikationseinheit 20 ist im Bereich der ersten Hängeförderstrecke 11 angeordnet. Die erste Identifikationseinheit 20 ist gemäß dem gezeigten Ausführungsbeispiel als Transponder-Leser ausgeführt. Die erste Identifikationseinheit ist geeignet, die Hängeadapterdaten, die in dem Identifikationsmittel an dem Hängeadapter 13 gespeichert sind, kontaktlos zu erfassen. Insbesondere ist es nicht erforderlich, die Hängeadapter 13 im Bereich der ersten Identifikationseinheit 20 zum Auslesen der Daten zu stoppen. Die erste Identifikationseinheit 20 ermöglicht insbesondere ein Auslesen der Daten im Vorbeifahren der Hängeadapter 13.

Entlang der Förderrichtung 12 ist die erste Identifikationseinheit 20 mit einem Vorlaufabstand A beabstandet zu der Vereinzelungseinheit 19 angeordnet. Zwischen der ersten Identifikationseinheit 20 und der Vereinze-Vereinzelungseinheit 19 wird ein sogenannter Vorlaufbereich 21 definiert. Der Vorlaufabstand A entspricht der Länge des Vorlaufbereichs 21. Die Länge des Vorlaufbereichs 21 ist insbesondere derart bemessen, dass mehrere Hängeadapter 13 in dem Vorlaufbereich angeordnet sein können, also dass mehrere Hängeadapter 13 zwischen der ersten Identifikationseinheit 20 und der Vereinzelungseinheit 19 angeordnet sein können.

Die Länge des Vorlaufbereichs 21 ist insbesondere derart bemessen, dass zwischen der ersten Identifikationseinheit 20 und der Vereinzelungseinheit 19 mehrere Hängeadapter 13, insbesondere mindestens fünf Hängeadapter 13, insbesondere mindestens zehn Hängeadapter 13, insbesondere mindestens zwanzig Hängeadapter 13 und insbesondere mindestens fünfzig Hängeadapter 13 angeordnet sein können. Vorteilhaft ist es, wenn die erste Identifikationseinheit 20 entlang der ersten Hängeförderstrecke 11 lageveränderlich festlegbar ist, so dass insbesondere die Länge des Vorlaufbereichs 21 veränderlich festlegbar eingestellt werden kann.

Stromabwärts der Vereinzelungseinheit 19 ist eine zweite Identifikationseinheit 22 angeordnet. Die zweite Identifikationseinheit 22 ist insbesondere identisch zu der ersten Identifikationseinheit 20 ausgeführt. Die zweite Identifikationseinheit ist im Bereich der Funktions-Hängeförderstrecke 14 angeordnet. Die zweite Identifikationseinheit 22 ist insbesondere zwischen der Vereinzelungseinheit 19 und dem Ausschleuseelement 18 angeordnet.

Die Steuerungseinheit 7 steht insbesondere mit dem Ausschleuseelement 18, der Vereinzelungseinheit 19 und den Identifikationseinheiten 20, 22 in Signalverbindung, insbesondere in bidirektionaler Signalverbindung.

Nachfolgend wird anhand von Fig. 1 und 2 ein Verfahren zum Fördern der Hängeadapter 13 in dem Umlaufspeicher 6 näher erläutert.

Einzelwaren werden entweder an Kleiderbügeln oder in einer Fördertasche an den Hängeadaptern 13 hängend von der Aufgabestation 4 über das Einschleuseelement 17 dem Umlaufspeicher 6 zugeführt. Die Hängeadapter 13 werden entlang der ersten Hängeförderstrecke 11 gefördert und an der Vereinzelungseinheit 19 gestaut.

Bevor die Hängeadapter 13 an der Vereinzelungseinheit 19 ankommen, passieren sie die erste Identifikationseinheit 20. Dabei werden die Hängeadapter 13 mittels des daran befindlichen Identifikationsmittels identifiziert, also die Hängeadapterdaten ausgelesen und ein entsprechendes erstes Identifikationssignal in der Identifikationseinheit erzeugt. Das erste Identifikationssignal wird von der ersten Identifikationseinheit 20 an die Steuerungseinheit 7 übertragen. In Abhängigkeit davon, ob die Hängeadapter 13, die die erste Identifikationseinheit 20 passiert haben, einem aktuellen Auftrag zugeordnet, also aus dem Umlaufspeicher 6 auszuschleusen sind, wird in der Steuerungseinheit 7 ein entsprechendes Stellsignal erzeugt.

Ein erstes Stellsignal wird erzeugt, wenn sich in dem Vorlaufbereich 21 mindestens ein auszuschleusender Hängeadapter 13 befindet. Ein zweites Stellsignal wird erzeugt, wenn in dem Vorlaufbereich 21 kein auszuschleusender Hängeadapter 13 angeordnet ist. Gemäß der Darstellung in Fig. 1 befinden sich in dem Vorlaufbereich 21 keine Hängeadapter 13, die auszuschleusen sind. Entsprechend wird gemäß der Anordnung in Fig. 2 das zweite Stellsignal erzeugt.

Das zweite Stellsignal wird von der Steuerungseinheit 7 an die Vereinzelungseinheit 19 übertragen. Die Vereinzelungseinheit 19 vereinzelt die Hängeadapter 13 mit einem zweiten Förderabstand d₂. Da die mittels der zweiten Identifikationseinheit 22 identifizierten Hängeadapter 13 nicht ausgeschleust werden müssen, kann der zweite Förderabstand d₂ vergleichsweise klein gewählt werden. Das bedeutet, dass die Hängeadapterdichte entlang der Funktions-Hängeförderstrecke 14 vergleichsweise hoch ist. Für den Fall, dass keine Hängeadapter 13 in dem Vorlaufbereich 21 für einen Ausschleusevorgang vorgesehen sind, kann eine Förderung der Einzelwaren mit einer vergleichsweise hohen Förderrate erfolgen.

Insbesondere übermittelt die Steuerungseinheit 7 ein Deaktivierungssignal an die zweite Identifikationseinheit 22. Das Deaktivierungssignal wird insbesondere automatisiert in der Steuerungseinheit 7 erzeugt, wenn in dem Vorlaufbereich 21 kein auszuschleusender Hängeadapter 13 angeordnet ist. Insbesondere wird das Deaktivierungssignal in Verbindung mit dem zweiten Stellsignal, insbesondere davor, zeitgleich oder danach, erzeugt. Da ein Ausschleusen von Hängeadaptern 13 aus dem Umlaufspeicher 6 nicht vorgesehen ist, kann die zweite Identifikationseinheit 22 deaktiviert sein. Das Risiko, dass Hängeadapter 13 unbeabsichtigt ausgeschleust werden, ist verhindert, wenn die zweite Identifikationseinheit 22 deaktiviert ist.

Wenn die erste Identifikationseinheit 20 einen Hängeadapter 13 identifiziert, der ausgeschleust werden soll, weil er insbesondere einem Auftrag zugehörig ist, der zur Kommissionierung vorgesehen ist, wird ein entsprechendes Identifikationssignal erzeugt, so dass die Steuerungseinheit das erste Stellsignal erzeugt und an die Vereinzelungseinheit 19 überträgt. Aufgrund des ersten Stellsignals werden die Hängeadapter 13 von der Vereinzelungseinheit 19 mit einem ersten Förderabstand d₁ vereinzelt, der insbesondere größer ist als der zweite Förderabstand d₂. Der zweite Förderab-Förderabstand d₂ beträgt insbesondere höchstens 70 % des ersten Förderabstands di, insbesondere höchstens 60 %, insbesondere höchstens 50 %, insbesondere höchstens 40 %, insbesondere höchstens 30 % und insbesondere höchstens 20 %. Der zweite Förderabstand d₂ entspricht einem Mindest-Förderabstand dₘᵢₙ, der erforderlich ist, um den auszuschleusenden Hängeadapter 13 mittels des Ausschleuseelements 18 aus der Hängefördertechnik 6, also dem Umlaufspeicher 6, zuverlässig und insbesondere kollisionsfrei, auszuschleusen.

Der Modus der Hängefördertechnik 6, in dem die Vereinzelungseinheit 19 die Vereinzelung von dem zuvor kleineren zweiten Förderabstand d₂ auf den nun größeren ersten Förderabstand d₁ umgestellt hat, ist in Fig. 2 dargestellt.

Da die der Funktions-Hängeförderstrecke 14 zugeführten Hängeadapter 13 nun zumindest teilweise zum Ausschleusen vorgesehen sind, ist die zweite Identifikationseinheit 22 wieder aktiviert. Dazu übermittelt die Steuerungseinheit 7 ein Aktivierungssignal an die zweite Identifikationseinheit 22, insbesondere wenn das erste Stellsignal in der Steuerungseinheit 7 erzeugt wird.

Die erfindungsgemäße Hängefördertechnik 6 ist in zwei verschiedenen Modi betreibbar. In dem ersten Modus gemäß Fig. 1, in dem kein Ausschleusen von Hängeadaptern 13 aus der Hängefördertechnik 6 vorgesehen ist, können die Hängeadapter 13 auch im Bereich der Funktions-Hängeförderstrecke 14 mit kleinem Förderabstand d₂, insbesondere mit Mindest-Förderabstand dₘᵢₙ, gefördert werden. In diesem Modus ermöglicht der Umlaufspeicher 6 eine hohe Förderrate.

In dem zweiten Modus gemäß Fig. 2 ist sichergestellt, dass der Förderabstand d₁ zwischen den Hängeadaptern 13 groß genug ist, um ein zuverlässiges Ausschleusen der Hängeförderadapter 13 aus dem Umlaufspeicher 6 mittels des Ausschleuseelements 18 zu gewährleisten.

Dabei ist es wesentlich, dass die Vereinzelungseinheit 19 ein veränderliches Festlegen des Vereinzelungsabstands, also des Förderabstands zwischen den Hängeadaptern 13 ermöglicht. Mittels der ersten Identifikationseinheit 20 werden Hängeadapter 13, die später ausgeschleust werden sollen, frühzeitig erkannt, um ein Verändern des Förderabstands über die Vereinzelungseinheit 19 zu ermöglichen.

Vorteilhaft ist es, wenn insbesondere dann, wenn ein vorerst letzter Hängeadapter 13 ausgeschleust worden ist, von dem zweiten Modus gemäß Fig. 2, insbesondere automatisiert, in den ersten Modus gemäß Fig. 1 zurückgeschaltet wird. Es ist dadurch möglich, die Hängeförderanlage 1 und insbesondere die Hängefördertechnik 6 mit möglichst hoher Durchsatzrate, also Förderrate, zu betreiben.

Ein insbesondere automatisiertes Zurückschalten von dem zweiten Modus in den ersten Modus ist beispielsweise dadurch möglich, dass die Identifikationseinheiten 20, 22 auf eine Liste zugreifen, die in der Steuerungseinheit 7 geführt wird. Sobald die erste Identfikationseinheit 20 einen auszuschleusenden Hängeadapter 13 identifiziert, wird dieser in die Liste eingetragen. Wenn dieser Hängeadapter 13 die zweite Identifikationseinheit 22 passiert und dort identifiziert wird, wird dieser Hängeadapter 13 wieder aus der Liste gestrichen. Das bedeutet, dass die Hängefördertechnik 6 immer dann im zweiten Modus, also mit vergrößertem Förderabstand d₁ betrieben wird, wenn die Liste mindestens einen Eintrag aufweist. Sobald die Liste leer ist, also keinen Eintrag aufweist, erfolgt ein automatisches Umschalten in den ersten Modus mit dem Mindest-Förderabstand dₘᵢₙ.

## Patentansprüche

1. Hängefördertechnik zum Fördern von Hängeadaptern (13) entlang einer Förderrichtung (12) umfassend
a. eine erste Hängeförderstrecke (11),
b. eine fördertechnisch mit der ersten Hängeförderstrecke (11) verbundene Funktions-Hängeförderstrecke (14), die ein Ausschleuseelement (18) zum Ausschleusen von Hängeadaptern (13) aus der Hängefördertechnik (6) aufweist,
c. eine stromaufwärts der Funktions-Hängeförderstrecke (14) angeordnete Vereinzelungseinheit (19) zum vereinzelten Zuführen der Hängeadapter (13) in die Funktions-Hängeförderstrecke (14),
d. eine stromaufwärts der Vereinzelungseinheit (19) angeordnete erste Identifikationseinheit (20) zum Identifizieren auszuschleusender Hängeadapter (13),
e. eine stromabwärts der Vereinzelungseinheit (19) angeordnete zweite Identifikationseinheit (22) zum Identifizieren auszuschleusender Hängeadapter (13),
f. eine Steuerungseinheit (7) zum automatischen Fördern und Ausschleusen der Hängeadapter (13), wobei die Steuerungseinheit (7) mit dem Ausschleuseelement (18), der ersten Identifikationseinheit (20), der zweiten Identifikationseinheit (22) und der Vereinzelungseinheit (19) in Signalverbindung steht,
**dadurch gekennzeichnet, dass** die Vereinzelungseinheit (19) mittels der Steuerungseinheit (7) derart schaltbar ist, dass ein entlang der Förderrichtung (12) orientierter Förderabstand (d₁, d₂) zwischen zwei benachbarten Hängeadaptern (13) veränderlich festlegbar ist,
wobei für den Fall, dass von der ersten Identifikationseinheit (20) keine auszuschleusende Hängeadapter (13) identifiziert worden sind, die Vereinzelung mit einem Förderabstand erfolgt, der kleiner ist als ein Mindest-Förderabstand, und
für den Fall, dass mittels der ersten Identifikationseinheit (20) mindestens ein auszuschleusender Hängeadapter (13) identifiziert worden ist, die Hängeadapter (13) nachfolgend mit dem erforderlichen Mindest-Förderabstand mittels der Vereinzelungseinheit (19) vereinzelt und in der Funktions-Hängeförderstrecke (14) gefördert werden.

2. Hängefördertechnik gemäß Anspruch 1, **dadurch gekennzeichnet, dass** die Hängefördertechnik (6) als Umlaufspeicher ausgeführt ist.

3. Hängefördertechnik gemäß einem der vorstehenden Ansprüche, **gekennzeichnet durch** eine zweite Hängeförderstrecke (15), die fördertechnisch mit der Funktions-Hängeförderstrecke (14) verbunden ist, und die insbesondere mittels einer Verbindungs-Förderstrecke (16) mit der ersten Hängeförderstrecke (11) fördertechnisch verbunden ist.

4. Hängefördertechnik gemäß einem der vorstehenden Ansprüche, **gekennzeichnet durch** ein Einschleuseelement (17) zum Einschleusen von Hängeadaptern (13) in die Hängefördertechnik (6), wobei das Einschleuseelement (17) insbesondere an einer Verbindungs-Förderstrecke (16) angeordnet ist.

5. Hängefördertechnik gemäß einem der vorstehenden Ansprüche, **gekennzeichnet durch** einen Vorlaufbereich (21) der ersten Hängeförderstrecke (11), der zwischen der ersten Identifikationseinheit (20) und der Vereinzelungseinheit (19) angeordnet ist, wobei der Vorlaufbereich (21) eine Länge (A) entlang der Förderrichtung (12) derart aufweist, dass mehrere Hängeadapter (13) gleichzeitig im Vorlaufbereich (21) anordenbar sind.

6. Hängeförderanlage umfassend mindestens eine Hängefördertechnik (6) gemäß einem der vorstehenden Ansprüche.

7. Verfahren zum Fördern von Hängeadaptern (13) in einer Hängefördertechnik (6), insbesondere gemäß einem der vorstehenden Ansprüche 1-5, entlang einer Förderrichtung (12) umfassend die Verfahrensschritte
- hängendes Fördern mindestens eines Hängeadapters (13) entlang einer ersten Hängeförderstrecke (11) der Hängefördertechnik (6),
- Identifizieren auszuschleusender Hängeadapter (13) mittels einer ersten Identifikationseinheit (20),
- Übertragen eines ersten Identifikationssignals von der ersten Identifikationseinheit (20) an eine Steuerungseinheit (7),
- Erzeugen eines Stellsignals mittels der Steuerungseinheit (7), wobei
-- ein erstes Stellsignal erzeugt wird, wenn mittels der ersten Identifikationseinheit (20) mindestens ein auszuschleusender Hängeadapter (13) identifiziert worden ist,
-- ein zweites Stellsignal erzeugt wird, wenn mittels der ersten Identifikationseinheit (20) kein auszuschleusender Hängeadapter (13) identifiziert worden ist,
- Übertragen des Stellsignals von der Steuerungseinheit (7) an eine Vereinzelungseinheit (19),
- Vereinzeln der Hängeadapter (13) mittels der Vereinzelungseinheit (19), wobei ein Förderabstand zwischen zwei benachbarten Hängeadaptern (13) in Abhängigkeit des Stellsignals derart festgelegt ist, dass ein erster Förderabstand (d₁) infolge des ersten Stellsignals größer ist als ein zweiter Förderabstand (d₂) infolge des zweiten Stellsignals,
- Identifizieren auszuschleusender Hängeadapter (13) mittels einer zweiten Identifikationseinheit (22),
- Übertragen eines zweiten Identifikationssignals von der zweiten Identifikationseinheit (22) an die Steuerungseinheit (7),
- Erzeugen eines Ausschleusesignals mittels der Steuerungseinheit (7), wenn mittels der zweiten Identifikationseinheit (22) ein auszuschleusender Hängeadapter (13) identifiziert worden ist,
- Übertragen des Ausschleusesignals von der Steuerungseinheit (7) an eine Ausschleuseeinheit (18),
- Ausschleusen des auszuschleusenden Hängeadapters (13) aus der Hängefördertechnik (6) mittels eines Ausschleuseelements (18).

8. Verfahren gemäß Anspruch 7, **dadurch gekennzeichnet, dass** Hängeadapterdaten mittels der Identifikationseinheiten (20, 22) kontaktlos, insbesondere im Vorbeifahren, erfasst werden.

9. Verfahren gemäß Anspruch 7 oder 8, **dadurch gekennzeichnet, dass** die Hängeadapter (13) in der Hängefördertechnik (6), insbesondere endlos, umlaufend förderbar sind.

10. Verfahren gemäß einem der Ansprüche 7 bis 9, **gekennzeichnet durch** Deaktivieren der zweiten Identifikationseinheit (22) **durch** Übermitteln eines Deaktivierungssignals von der Steuerungseinheit (7) an die zweite Identifikationseinheit (22), wenn das erste Stellsignal erzeugt wird.

11. Verfahren gemäß einem der Ansprüche 7 bis 10, **dadurch gekennzeichnet, dass** mit dem ersten Stellsignal der auszuschleusende Hängeadapter (13) in eine Liste aufgenommen und aus dieser Liste wieder ausgetragen wird, wenn der Hängeadapter (13) mittels der zweiten Identifikationseinheit (22) identifiziert worden ist.

12. Verfahren gemäß Anspruch 11, **gekennzeichnet durch** automatisches Erzeugen des zweiten Stellsignals, wenn aus der Liste der letzte Hängeadapter (13) ausgetragen worden ist.

## Claims

1. An overhead conveyor system for conveying overhead adapters (13) along a conveying direction (12), comprising
a. a first overhead conveyor line (11),
b. a functional overhead conveyor line (14) connected in terms of conveying technology to the first overhead conveyor line (11) and having a discharge element (18) for discharging overhead adapters (13) from the overhead conveyor system (6),
c. a separating unit (19) arranged upstream of the functional overhead conveyor line (14) for feeding the overhead adapters (13) separately into the functional overhead conveyor line (14),
d. a first identification unit (20) arranged upstream of the separating unit (19) for identifying overhead adapters (13) to be discharged,
e. a second identification unit (22) arranged downstream of the separating unit (19) for identifying overhead adapters (13) to be discharged,
f. a control unit (7) for automatically conveying and discharging the overhead adapters (13), wherein the control unit (7) is in signal connection with the discharge element (18), the first identification unit (20), the second identification unit (22) and the separating unit (19),
**characterized in that** the separating unit (19) is switchable by means of the control unit (7) such that a conveying distance (d₁, d₂) oriented along the conveying direction (12) between two adjacent overhead adapters (13) can be set variably,
wherein in the event that no overhead adapters (13) to be discharged have been identified by the first identification unit (20), the separation takes place with a conveying distance that is smaller than the minimum conveying distance, and
in the event that at least one overhead adapter (13) to be discharged has been identified by means of the first identification unit (20), the overhead adapters (13) are subsequently separated at the required minimum conveying distance by means of the separating unit (19) and conveyed in the functional overhead conveyor line (14).

2. An overhead conveyor system according to claim 1, **characterized in that** the overhead conveyor system (6) is designed as a circulating storage device.

3. An overhead conveying system according to any one of the preceding claims, **characterized by** a second overhead conveyor line (15) which is connected in terms of conveying technology to the functional overhead conveyor line (14) and which is connected in terms of conveying technology to the first overhead conveyor line (11), in particular by means of a connecting conveyor line (16).

4. An overhead conveyor system according to any one of the preceding claims, **characterized by** an insertion element (17) for inserting overhead adapters (13) into the overhead conveyor system (6), wherein the insertion element (17) is arranged in particular on a connecting conveyor line (16).

5. An overhead conveyor system according to any one of the preceding claims, **characterized by** an advance region (21) of the first overhead conveyor line (11), which advance region (21) is arranged between the first identification unit (20) and the separating unit (19), wherein the advance region (21) has a length (A) along the conveying direction (12) such that a plurality of overhead adapters (13) can be arranged simultaneously in the advance region (21).

6. An overhead conveyor facility comprising at least one overhead conveyor system (6) according to any one of the preceding claims.

7. A method for conveying overhead adapters (13) in an overhead conveyor system (6), in particular according to any one of the preceding claims, along a conveying direction (12), comprising the method steps of
- suspended conveyance of at least one overhead adapter (13) along a first overhead conveyor line (11) of the overhead conveyor system (6),
- identifying overhead adapters (13) to be discharged by means of a first identification unit (20),
- transmitting a first identification signal from the first identification unit (20) to a control unit (7),
- generating a control signal by means of the control unit (7), wherein
-- a first control signal is generated when at least one overhead adapter (13) to be discharged has been identified by means of the first identification unit (20),
-- a second control signal is generated if no overhead adapter (13) to be discharged has been identified by means of the first identification unit (20),
- transmitting the control signal from the control unit (7) to a separating unit (19),
- separating the overhead adapters (13) by means of the separating unit (19), wherein a conveying distance between two adjacent overhead adapters (13) is set in dependence on the control signal such that a first conveying distance (d₁) due to the first control signal is greater than a second conveying distance (d₂) due to the second control signal,
- identifying overhead adapters (13) to be discharged by means of a second identification unit (22),
- transmitting a second identification signal from the second identification unit (22) to the control unit (7),
- generating a discharge signal by means of the control unit (7) when an overhead adapter (13) to be discharged has been identified by means of the second identification unit (22),
- transmitting the discharge signal from the control unit (7) to a discharge unit (18),
- discharging the overhead adapter (13) to be discharged from the overhead conveyor system (6) by means of a discharge element (18).

8. A method according to claim 7, **characterized in that** overhead adapter data is detected by means of the identification units (20, 22) in a contactless manner, in particular while passing by.

9. A method according to claim 7 or 8, **characterized in that** the overhead adapters (13) can be conveyed in a circulating manner, in particular endlessly, in the overhead conveyor system (6).

10. A method according to any one of claims 7 to 9, **characterized by** deactivating the second identification unit (22) by transmitting a deactivation signal from the control unit (7) to the second identification unit (22) when the first control signal is generated.

11. A method according to any one of claims 7 to 10, **characterized in that** the overhead adapter (13) to be discharged is included in a list with the first control signal and is removed from this list again when the overhead adapter (13) has been identified by means of the second identification unit (22).

12. A method according to claim 11, **characterized by** automatically generating the second control signal when the last overhead adapter (13) has been removed from the list.

## Revendications

1. Technique de transport suspendu pour le transport d'adaptateurs suspendus (13) le long d'une direction de transport (12) comprenant
a. une première section de transport suspendu (11),
b. une section de transport suspendu fonctionnelle (14) reliée par technique de convoyage à la première section de transport suspendu (11), qui présente un élément d'enlevage (18) pour enlever des adaptateurs suspendus (13) de la technique de transport suspendu (6),
c. une unité de séparation (19) disposée en amont de la section de transport suspendu fonctionnelle (14) pour l'amenée individuelle des adaptateurs suspendus (13) dans la section de transport suspendu fonctionnelle (14),
d. une première unité d'identification (20) disposée en amont de l'unité de séparation (19) pour identifier des adaptateurs suspendus (13) à enlever,
e. une deuxième unité d'identification (22) disposée en aval de l'unité de séparation (19) pour identifier des adaptateurs suspendus (13) à enlever,
f. une unité de commande (7) pour le transport et l'enlevage automatiques des adaptateurs suspendus (13), l'unité de commande (7) étant en liaison de signalisation avec l'élément d'enlevage (18), la première unité d'identification (20), la deuxième unité d'identification (22) et l'unité de séparation (19),
**caractérisée en ce que** l'unité de séparation (19) peut être commutée au moyen de l'unité de commande (7) de telle sorte qu'une distance de transport (d₁, d₂) orientée le long de la direction de transport (12) peut être fixée de manière variable entre deux adaptateurs suspendus (13) voisins,
dans laquelle, dans le cas où la première unité d'identification (20) n'a pas identifié d'adaptateurs suspendus (13) à enlever, la séparation s'effectue avec une distance de transport qui est inférieure à une distance de transport minimale, et
dans le cas où au moins un adaptateur suspendu (13) à enlever a été identifié au moyen de la première unité d'identification (20), les adaptateurs suspendus (13) sont ensuite séparés avec la distance de transport minimale requise au moyen de l'unité de séparation (19) et transportés dans la section de transport suspendu fonctionnelle (14).

2. Technique de transport suspendu selon la revendication 1, **caractérisée en ce que** la technique de transport suspendue (6) est réalisée sous forme d'accumulateur à circulation.

3. Technique de transport suspendu selon l'une quelconque des revendications précédentes, **caractérisée par** une deuxième section de transport suspendu (15), qui est reliée par une technique de convoyage à la voie de convoyage suspendu fonctionnelle (14), et qui est reliée par technique de convoyage à la première section de transport suspendu (11), en particulier au moyen d'une section de transport de liaison (16).

4. Technique de transport suspendu selon l'une quelconque des revendications précédentes, **caractérisée par** un élément d'introduction (17) pour introduire des adaptateurs suspendus (13) dans la technique de transport suspendu (6), l'élément d'introduction (17) étant en particulier disposé sur une section de transport de liaison (16).

5. Technique de transport suspendu selon l'une quelconque des revendications précédentes, **caractérisée par** une zone d'avance (21) de la première section de transport suspendu (11), qui est disposée entre la première unité d'identification (20) et l'unité de séparation (19), la zone d'avance (21) présentant une longueur (A) le long de la direction de transport (12) de telle sorte que plusieurs adaptateurs suspendus (13) peuvent être disposés simultanément dans la zone d'avance (21).

6. Installation de transport suspendu comprenant au moins une technique de transport suspendu (6) selon l'une quelconque des revendications précédentes.

7. Procédé de transport d'adaptateurs suspendus (13) dans une technique de transport suspendu (6), en particulier selon l'une quelconque des revendications 1 à 5 précédentes, le long d'une direction de transport (12) comprenant les étapes de procédé suivantes
- transport suspendu d'au moins un adaptateur suspendu (13) le long d'une première section de transport suspendu (11) de la technique de transport suspendu (6),
- identification d'adaptateurs suspendus (13) à enlever au moyen d'une première unité d'identification (20),
- transmission d'un premier signal d'identification de la première unité d'identification (20) à une unité de commande (7),
- génération d'un signal de réglage au moyen de l'unité de commande (7), dans laquelle
-- un premier signal de réglage est généré lorsqu'au moins un adaptateur suspendu (13) à enlever a été identifié au moyen de la première unité d'identification (20),
-- un deuxième signal de réglage est généré lorsqu'aucun adaptateur suspendu (13) à enlever n'a été identifié au moyen de la première unité d'identification (20),
- transmission du signal de réglage de l'unité de commande (7) à une unité de séparation (19),
- séparation des adaptateurs suspendus (13) au moyen de l'unité de séparation (19), une distance de transport entre deux adaptateurs suspendus (13) voisins étant fixée en fonction du signal de réglage de telle sorte qu'une première distance de transport (d₁) due au premier signal de réglage soit supérieure à une deuxième distance de transport (d₂) due au deuxième signal de réglage,
- identification d'adaptateurs suspendus (13) à enlever au moyen d'une deuxième unité d'identification (22),
- transmission d'un deuxième signal d'identification de la deuxième unité d'identification (22) à l'unité de commande (7),
- génération d'un signal d'enlevage au moyen de l'unité de commande (7) lorsqu'un adaptateur suspendu (13) à enlever a été identifié au moyen de la deuxième unité d'identification (22),
- transmission du signal d'enlevage de l'unité de commande (7) à une unité d'enlevage (18),
- enlevage de l'adaptateur suspendu (13) à enlever de la technique de transport suspendu (6) au moyen d'un élément d'enlevage (18).

8. Procédé selon la revendication 7, **caractérisé en ce que** des données d'adaptateurs suspendus sont saisies sans contact, en particulier au passage, au moyen des unités d'identification (20, 22).

9. Procédé selon la revendication 7 ou 8, **caractérisé en ce que** les adaptateurs suspendus (13) peuvent être transportés en circulation, en particulier sans fin, dans la technique de transport suspendu (6).

10. Procédé selon l'une quelconque des revendications 7 à 9, **caractérisé par** la désactivation de la deuxième unité d'identification (22) en transmettant un signal de désactivation de l'unité de commande (7) à la deuxième unité d'identification (22) lorsque le premier signal de commande est généré.

11. Procédé selon l'une quelconque des revendications 7 à 10, **caractérisé en ce qu'**avec le premier signal de réglage, l'adaptateur suspendu (13) à enlever est enregistré dans une liste et est à nouveau retiré de cette liste lorsque l'adaptateur suspendu (13) a été identifié au moyen de la deuxième unité d'identification (22).

12. Procédé selon la revendication 11, **caractérisé par** la génération automatique du deuxième signal de réglage lorsque le dernier adaptateur suspendu (13) a été retiré de la liste.
